(19) **Europäisches Patentamt**
**European Patent Office**
**Office européen des brevets**

(11) **EP 1 722 082 B1**

(12) **EUROPEAN PATENT SPECIFICATION**

(45) Date of publication and mention
of the grant of the patent:
**29.10.2008 Bulletin 2008/44**

(51) Int Cl.:
*F01N 9/00* *(2006.01)*    *F01N 11/00* *(2006.01)*
*F02D 41/02* *(2006.01)*

(21) Application number: **06009861.3**

(22) Date of filing: **12.05.2006**

(54) **Exhaust emission control system for internal combustion engine and control method therefor**

System zur Regelung der Abgasemissionen einer Brennkraftmaschine und Regelungsverfahren

Système de régulation des émissions d'un moteur à combustion interne et son procédé de commande

(84) Designated Contracting States:
**DE GB**

(30) Priority: **13.05.2005 JP 2005141622**
**13.05.2005 JP 2005141623**

(43) Date of publication of application:
**15.11.2006 Bulletin 2006/46**

(60) Divisional application:
**07018722.4 / 1 865 165**

(73) Proprietor: **HONDA MOTOR CO., LTD.**
**Tokyo 107-8556 (JP)**

(72) Inventors:
• **Chiba, Isao**
**Wako-shi**
**Saitama, 351-0193 (JP)**
• **Endo, Masatoshi**
**Wako-shi**
**Saitama, 351-0193 (JP)**
• **Okayasu, Kouji**
**Wako-shi**
**Saitama, 351-0193 (JP)**
• **Kaneko, Isao**
**Wako-shi**
**Saitama, 351-0193 (JP)**

(74) Representative: **Prechtel, Jörg et al**
**Weickmann & Weickmann**
**Patentanwälte**
**Postfach 86 08 20**
**81635 München (DE)**

(56) References cited:
EP-A- 1 350 934    EP-A- 1 437 486
EP-A- 1 437 492    EP-A- 1 515 027
EP-A1- 1 229 223    FR-A- 2 829 798
FR-A- 2 833 995    FR-A- 2 872 212
US-A- 4 719 751    US-A1- 2003 230 077
US-A1- 2003 230 079    US-A1- 2004 093 854
US-A1- 2004 103 648    US-A1- 2004 211 159
US-A1- 2005 016 137

• PATENT ABSTRACTS OF JAPAN vol. 1997, no. 02, 28 February 1997 (1997-02-28) & JP 08 284643 A (NIPPONDENSO CO LTD), 29 October 1996 (1996-10-29)
• PATENT ABSTRACTS OF JAPAN vol. 018, no. 164 (M-1579), 18 March 1994 (1994-03-18) & JP 05 332125 A (NISSAN MOTOR CO LTD), 14 December 1993 (1993-12-14)

**EP 1 722 082 B1**

**Description**

Field of the Invention

This invention relates to an exhaust emission control system for an internal combustion engine, for collecting particulates from exhaust gases discharged from an internal combustion engine, particularly from a diesel engine, and a control method therefor.

Description of the Related Art

In general, in an exhaust emission control system for a diesel engine, a filter is provided in an exhaust system of the engine so as to collect particulates from exhaust gases discharged from the engine. When the amount of particulates deposited on the filter is large, exhaust pressure increases, resulting in reduced power output of the engine and degraded fuel economy. To prevent the above inconveniences, an exhaust emission control system for an internal combustion engine has been proposed e.g. in Japanese Laid-Open Patent Publication (Kokai) No. H08-284643, which regenerates the filter by heating the filter to burn deposited particulates.

In the proposed exhaust emission control system, during operation of the engine, pressures in an exhaust pipe at respective locations upstream and downstream of the filter are detected, and according to the difference between the former and the latter (hereinafter referred to as "the differential pressure"), the amount of particulates collected by the filter is calculated. When the calculated amount of collected particulates is between a lower limit and an upper limit, regeneration of the filter is carried out. Further, in the exhaust emission control system, when the calculated amount of collected particulates exceeds the upper limit amount, it is judged that an excess amount of particulates has been deposited on the filter, so that regeneration of the filter is inhibited. This prevents the filter from being overheated by thermal runaway due to rapid combustion the excess amount of deposited particulates, and being cracked or melted. Further, when the regeneration of the filter is inhibited, a warning lamp is turned on to notify the driver that the an excess amount of particulates has been deposited on the filter.

However, the differential pressure between the upstream and downstream sides of the filter varies not only with the amount of deposited particulates but also with operating conditions of the engine. Particularly when the engine is in a low engine speed condition, such as during idling thereof, the amount of exhaust gases is small, and hence exhaust pressure and the differential pressure are also low. In the conventional exhaust emission control system, however, the amount of collected particulates is simply calculated according to the differential pressure between the upstream and downstream sides of the filter, and therefore there is a fear that the amount of deposited particulates cannot be accurately estimated. For examples, when the engine is in a low engine speed condition as described above, the differential pressure becomes smaller, so that the estimated amount of collected particulates is sometimes lower than the upper limit amount, in spite of an excess amount of particulates having been deposited on the filter. In such a case, the regeneration of the filter is not inhibited, so that the filter is overheated due to execution of the regeneration, which can cause cracking or melting of the filter.

Further, there has been proposed a similar exhaust emission control system for an internal combustion engine has been proposed in Japanese Laid-Open Patent Publication (Kokai) No. H05-332125. The exhaust emission control system calculates the amount of particulates discharged from the engine per unit time based on the rotational speed and the accelerator pedal opening of the engine, installed on an automotive vehicle, and corrects the amount of particulates according to detected engine coolant temperature. Further, the corrected amount of particulates is added to the cumulative amount of deposited particulates calculated hitherto, to thereby calculate the current amount of deposited particulates. Then, when the calculated amount of deposited particulates exceeds a threshold value, the filter is heated with a heater to start regeneration operation of the filter. Further, during the regeneration operation, the amount of particulates burned in the filter per unit time is calculated based on the detected temperature of the filter, and the current amount of deposited particulates is calculated by subtracting the calculated amount of burned particulates from the immediately preceding value of the amount of deposited particulates. When the calculated amount of deposited particulates drops below the threshold value, the regeneration operation of the filter is terminated. When the regeneration operation is terminated, the amount of deposited particulates is set to an initial value.

As described above, the conventional exhaust emission control system calculates the amount of particulates deposited on the filter according to the rotational speed of the engine, the accelerator pedal opening, the engine coolant temperature, and the temperature of the filter. However, the actual amount of deposited particulates also varies with the temperature and pressure of air drawn into the filter, etc. The conventional exhaust emission control system however, simply calculates the amount of deposited particulates according to the above-described parameters, which makes it possible to accurately calculate the amount of deposited particulates, and the calculated amount is low in reliability. Therefore, for example, when the amount of deposited particulates is estimated to be smaller than the actual amount thereof, timing for terminating the regeneration operation of the filter is made earlier than proper timing, whereby it is impossible to perform a sufficient regeneration operation of the filter. This causes some amount of particulates to remain deposited on the filter. On the other hand, when the amount of deposited particulates is estimated to be larger than the actual amount thereof, the timing for terminating the regeneration operation of the filter is made later than the proper timing, whereby electric energy for driving the heater is wastefully consumed. Also, when the regeneration operation of the filter is executed e.g. by supplying an increased amount of fuel to a combustion chamber, excess supply of fuel results in degraded fuel economy.

Further, in the conventional exhaust emission control system, when the regeneration operation of the filter is terminated, the amount of deposited particulates is set to the initial value, and hence if the timing for terminating the regeneration operation is made earlier or later, as described above, an initial value different from the present and actual amount of deposited particulates is set. When the initial value thus deviates from the proper value, the amount of deposited particulates, which is calculated by adding the amount of discharged particulates to the initial value, is further degraded in reliability.

SUMMARY OF THE INVENTION

The object is to provide an exhaust emission control system for an internal combustion engine, which is capable of confirmedly and accurately estimating the amount of deposition of particulates on a filter, and properly inhibiting the regeneration of the filter based on the estimated amount of deposition of particulates, and a control method therefor.

To attain the object, of the present invention, there is provided an exhaust emission control system for an internal combustion engine installed on an automotive vehicle, as a drive source, for reducing exhaust reducing exhaust emissions by collecting particulates from exhaust gases discharged from the engine to an exhaust system, comprising a filter provided in the exhaust system, for collecting particulates from the exhaust gases, a differential pressure sensor for detecting a differential pressure between upstream and downstream sides of the filter in the exhaust system, first deposition amount-estimating means to be operated during traveling of the vehicle, for estimating an amount of deposition of the particulates collected by the filter, filter regeneration means to be operated during traveling of the vehicle, for regenerating the filter by burning the particulates deposited on the filter when the estimated amount of deposition of the particulates has reached a first predetermined threshold value, engine speed-increasing means for increasing a rotational speed of the engine to a predetermined rotational speed during service inspection of the vehicle, second deposition amount-estimating means, to be operated during service inspection of the vehicle, for estimating an amount of deposition of the particulates collected by the filter according to the differential pressure detected by the differential pressure sensor when the rotational speed of the engine has been increased, and filter regeneration-inhibiting means to be operated during service inspection of the vehicle, for inhibiting regeneration of the filter when the amount of deposition of the particulates estimated by the second deposition amount-estimating means is not smaller than a second predetermined threshold value larger than the first predetermined threshold value.

With the configuration of the exhaust emission control system according to the present invention, particulates in exhaust gases discharged from the engine are collected by the filter provided in the exhaust system. The first deposition amount-estimating means estimates the amount of deposition of particulates on the filter during traveling of the vehicle, i.e. the amount of particulates deposited on the filter, and when the estimated amount of deposition of the particulates has reached a first threshold value, the filter regeneration, means regenerates the filter during traveling of the vehicle. Further, the engine speed-increasing means increases the rotational speed of the engine to a predetermined rotational speed during service inspection of the vehicle, and the differential pressure sensor detects the differential pressure between the upstream and downstream sides of the filter in the exhaust system. The second deposition amount-estimating means estimates the amount of deposition of the particulates on the filter according to the differential pressure detected by the differential pressures sensor during service inspection of the vehicle. When the amount of deposition of the particulates thus estimated is not smaller than a second predetermined threshold value, it is judged that the filter is in an state in which an excess amount of particulates has been deposited thereon (an excess particulates-deposited state), and the filter regeneration-inhibiting means inhibits the regeneration of the filter during service inspection of the vehicle.

As described above, during traveling of the vehicle, when the amount of deposition of the particulates estimated by the first deposition amount-estimating means has reached the first threshold value, the filter is regenerated. Further, the rotational speed of the engine is increased during service inspection of the vehicle, and when during service inspection of the vehicle the amount of deposition of the particulates estimated by the second deposition amount-estimating means according to the differential pressure detected between upstream and downstream sides of the filter when the rotational speed of the engine has been increased during service inspection is not smaller than the second threshold value larger than the first predetermined threshold value, the regeneration of the filter is inhibited during service inspection. By increasing the rotational speed of the engine, the amount of exhaust gases is increased to increase exhaust pressure. Therefore, the differential pressure detected between the upstream and downstream sides of the filter also increases such that it is clearly noticeable. Further, since the engine is held at the predetermined rotational speed, it is possible to eliminate influence of a change in exhaust pressure caused by a change in operating conditions of the engine on the differential pressure. This makes it possible to accurately estimate the amount of deposition of the particulates according to the detected differential pressure, whereby when the estimated amount of deposition of the particulates is not smaller than the second threshold value, it is judged that the filter is in an excess particulates-deposited state, whereby the regeneration of the filter can be properly inhibited. This makes it possible to positively prevent occurrence of cracking or melting of the filter caused by overheat thereof.

Preferably, the engine is installed on an automotive vehicle, as a drive source, and the estimation of the amount of deposition of the particulates performed by the first deposition amount-estimating means, and the regeneration of the filter by the filter regeneration means are carried out as known during traveling of the vehicle, while according to the invention the estimation of the amount of deposition of the particulates performed by the second deposition amount-estimating means, and the inhibition of regeneration of the filter based on the estimated amount of deposition of the particulates are carried out during service inspection of the vehicle.

With this configuration, the engine is installed on an automotive vehicle, and the regeneration of the filter is carried out during traveling of the vehicle based on the amount of deposition of the particulates estimated by the first deposition amount-estimating means as known. Further, according to the invention, during traveling of the vehicle, for example, when a warning-lamp is turned on which indicates that the filter is in the excess particulates-deposited state, and the driver noticing the lighting of the warning lamp brings the vehicle to a service station, the rotational speed of the engine is increased during service inspection of the vehicle by the engine speed-increasing means, to thereby estimate the amount of deposition of the particulates at the time, and the regeneration of the filter is inhibited based on the estimated amount of deposition of the particulates.

As described above, even when the vehicle is brought to the service station e.g. by the driver noticing the lighting of the warning lamp indicating that the filter is in the excess particulates-deposited state, the regeneration of the filter is not immediately carried out, but it is confirmedly determined whether or not the filter is in the excess particulates-deposited state, based on the amount of deposition of the particulates estimated by the second deposition amount-estimating means. This makes it possible to confirmedly and accurately determine whether or not the filter is actually in the excess particulates-deposited state, irrespective of reliability of the determination of the excess particulates-deposited state performed during traveling of the vehicle. Further, according to the results of the determination, appropriate measures can be taken. For example, when it is determined that the filter, is in the excess particulates-deposited state, the regeneration of the filter can be inhibited, and the filter can be replaced by another, for example, whereas when it is determined that the filter is not in the excess particulates-deposited state, the regeneration of the filter can be carried out. Furthermore, it is possible to estimate the amount of deposition of the particulates only by increasing the rotational speed of the engine without causing the vehicle to travel. Therefore, it is possible to perform the above determination easily in the service station as well.

More preferably, the exhaust emission control system further comprises traveling-time filter regeneration-inhibiting means for inhibiting regeneration of the filter during traveling of the vehicle, when the estimated amount of deposition of the particulates is not smaller than a third predetermined threshold value, and the second threshold value is set to a value larger than the third threshold value.

With this configuration of the preferred embodiment, when the estimated amount of deposition of the particulates is not smaller than a third threshold value smaller than the second threshold value, the traveling-time filter regeneration-inhibiting means inhibits regeneration of the filter during traveling of the vehicle. As described above, according to the invention the engine is held at a predetermined high rotational speed during service inspection of the vehicle, and the amount of deposition of the particulates is estimated according to the differential pressure detected at the time. This makes the estimated amount of deposition of the particulates very reliable. In view of this, during the service inspection of the vehicle, the seconds threshold value is employed which is larger than the third threshold value and is closer to the amount of deposition of the particulates to be detected in a state corresponding to the excess particulates-deposited state of the filter, and the estimated amount of deposition of the particulates is compared with the second thresholds value, whereby it is possible to accurately determine whether or not the filter is actually in the excess particulates-deposited state.

On the other hand, during traveling of the vehicle, the operating conditions of the engine vary, which makes the estimated amount of deposition of the particulates liable to deviate from the actual amount of deposition of the particulates, and hence the reliability of the estimated amount of deposition of the particulates is low. In view of this, during traveling of the vehicle, the third threshold value smaller than the second threshold value is used for comparison with the estimated amount of deposition of the particulates, whereby it is determined toward the safe side whether or not the filter is in the excess particulates-deposited state, and the regeneration of the filter is inhibited rather earlier than not. This makes it possible to reliably prevent the regeneration of the filter from being executed in the excess particulates-deposited state, thereby making it possible to positively prevent occurrence of cracking or melting of the filter caused by overheat thereof during traveling of the vehicle.

To attain the object, in a second aspect of the present invention, there is provided a method of controlling an exhaust emission control system for an internal combustion engine installed on an automotive vehicle, as a drive source, the exhaust emission control system including a filter provided in an exhaust system, for collecting particulates from the exhaust gases, and a differential pressure sensor for detecting a differential pressure between upstream and downstream sides of the filter in the exhaust system, and reducing exhaust emissions by collecting particulates from exhaust gases discharged from the engine to the exhaust system, comprising a first deposition amount-estimating step of estimating an amount of deposition of the particulates collected by the filter, a filter regeneration step of regenerating the filter by burning the particulates deposited on the filter when the estimated amount of deposition of the particulates has reached a first predetermined threshold value the estimation of the amount of deposition of the particulates performed in said first deposition amount - estimating step, and the regeneration of the filter in said filter regeneration step are carried out during traveling of the vehicle, an engine speed-increasing step of increasing a rotational speed of the engine to a predetermined rotational speed during service inspection of the vehicle, a second deposition amount-estimating step of estimating an amount of deposition of the particulates collected by the filter according to the differential pressure detected by the differential pressure sensor when the rotational speed of the engine has been increased, and a filter regeneration-inhibiting step of inhibiting regeneration of the filter when the amount of deposition of the particulates estimated in the second deposition amount-estimating step is not smaller than a second predetermined threshold value larger than the first predetermined threshold value.

The estimation of the amount of deposition of the particulates performed in the second deposition amount-estimating step, and the inhibition of regeneration of the filter based on the estimated amount of deposition of the particulates are carried out during service inspection of the vehicle.

More preferably, the method further comprises a traveling-time filter regeneration-inhibiting step of inhibiting regeneration of the filter during traveling of the vehicle, when the estimated amount of deposition of the particulates is not smaller than a third predetermined threshold value, and the second threshold value is set to a value larger than the third threshold value.

The above and other objects, features, and advantages of the present invention will become more apparent from the following detailed description taken in conjunction with the accompanying drawings.

BRIEF DESCRIPTION OF THE DRAWINGS

FIG. 1 is a schematic diagram of an internal combustion engine to which is applied an exhaust emission control system according to the present invention;
FIG. 2 is a flowchart showing a regeneration control process executed during traveling of a vehicle, for control of regeneration of a filter;
FIG. 3 is a flowchart showing an excess deposition-determining process executed during service inspection of the vehicle, for determining whether or not the filter is in an excess PM deposited state;
FIG. 4 is a flowchart showing a regeneration control process executed during service inspection of the vehicle, for control of regeneration of the filter; and
FIG. 5 is a timing diagram showing examples of operations of the regeneration control process executed during service inspection of the vehicle, for control of regenerating of the filters.

DETAILED DESCRIPTION OF PREFERRED EMBODIMENTS

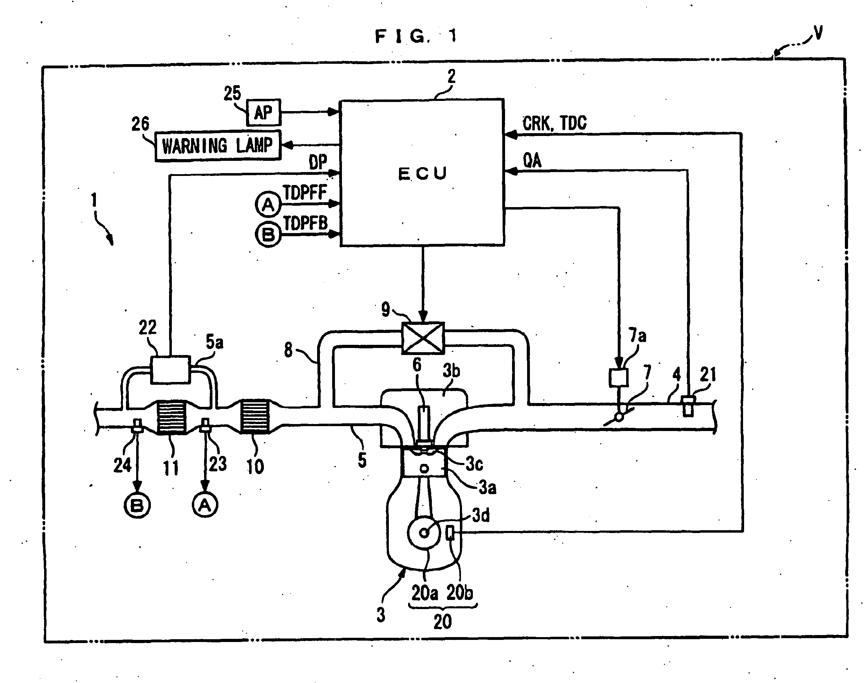

The present invention will now be described in detail with reference to the drawings showing preferred embodiments thereof. Referring first to FIG. 1, there is schematically shown the arrangement of an internal combustion engine (hereinafter simply referred to as "the engine") 3 to which is applied an exhaust emission control system 1 according to an embodiment of the present embodiment. The engine 3 is a diesel engine having e.g. four cylinders (only one of which is shown), and installed on an automotive vehicle V.

The engine 3 has a piston 3a and a cylinder head 3b provided on a cylinder-by-cylinder basis. The piston 3a and the cylinder head 3b define a combustion chamber 3c. The cylinder head 3b has an intake pipe 4 and an exhaust pipe 5 (exhaust system) connected thereto, with a fuel injection valve (hereinafter referred to as "the injector") 6 mounted therethrough such that it faces the combustion chamber 3c.

The injector 6 (filter regeneration means and regeneration operation-executing means) is inserted into the combustion chamber 3c through a central portion of the top wall thereof, and is connected to a high-pressure pump and then to a fuel tank, neither of which is shown, via a common rail. The valve-opening time period and valve-opening timing of the injector 6 are controlled by a drive signal delivered from the ECU 2, whereby a fuel injection amount QINJ and fuel injection timing are controlled.

Further, a magnet rotor 20a is mounted on a crankshaft 3d of the engine 3. The magnet rotor 20a and an MRE pickup 20b form a crank angle sensor 20 (first deposition amount-estimating means and exhaust gas flow rate-detecting means) which delivers a CRK signal and a TDC signal, which are both pulse signals, to the ECU 2 along with rotation of the crankshaft 3d.

Each pulse of the CRK signal is generated whenever the crankshaft 3d rotates through a predetermined crank angle (e.g. 30°). The ECU 2 calculates rotational speed NE of the engine 3 (hereinafter referred to as "the engine speed NE") based on the CRK signal. The TDC signal indicates that the piston 3a of each cylinder is at a predetermined crank angle position in the vicinity of the top dead center (TDC) at the start of the suction stroke thereof, and in the case of the four-cylinder engine of the illustrated example, it is delivered whenever the crankshaft 3d rotates through 180 degrees.

The intake pipe 4 has an intake throttle valve 7 provided therein for adjusting the amount of intake air (intake air amount). To the intake throttle valve 7 is connected an actuator 7a e.g. comprised of a DC motor. The degree of opening of the intake throttle valve 7 is controlled by controlling the duty ratio of an electric current supplied to the actuator 7a, with the ECU 2. Further, the intake pipe 4 has an air flow sensor 21 (exhaust gas flow rate-detecting means) inserted therein at a location upstream of the intake throttle valve 7. The air flow sensor 21 detects an intake air amount QA, and delivers a signal indicative of the sensed intake air amount QA to the ECU 2.

Further, an EGR passage 8 is connected between the intake pipe 4 and the exhaust pipe 5. The EGR passage 8 connects between the exhaust pipe 5 and a portion of the intake pipe 4 at a location downstream of the intake throttle valve 7. Part of exhaust gases of the engine 3 is recirculated into the intake pipe 4 via the EGR passage 8 as EGR gases, whereby combustion temperature in the combustion chamber 3c is lowered to reduce NOx in the exhaust gases.

Further, the EGR passage 8 has an EGR valve 9 disposed therein. The EGR valve 9 is implemented by a linear solenoid valve, and the valve lift amount thereof is controlled by a drive signal under duty ratio control from the ECU 2, whereby the amount of recirculated EGR gases is controlled.

Further, the exhaust pipe 5 has an oxidation catalyst 10 and a filter 11 arranged therein at respective locations downstream of the EGR passage 8 from upstream to downstream in the mentioned order. The oxidation catalyst 10 oxidizes HC and CO in exhaust gases to reduce exhaust emissions.

The filter 11 has a honeycomb core (not shown) formed e.g. of a porous ceramic, and is configured such that it collects particulates (hereinafter simply referred to as "PM" (Particulate Matter)), such as soot, from exhaust gases to thereby reduce the amount of PM emitted into the air. Further, the honeycomb core of the filter 11 carries the same oxidation catalyst (not shown) as the oxidation catalyst 10. As described above, since the filter 11 carries an oxidation catalyst, the temperature of the filter 11 is raised by the oxidation reaction of the oxidation catalyst, whereby PM is burned.

Furthermore, the exhaust pipe 5 has a pressure-introducing passage 5a connected thereto in a manner bypassing the filter 11 (i.e. communicating between a portion of the exhaust pipe 5 between the oxidation catalyst 10 and the filter 11 and a portion of the same downstream of the filter 11). A differential pressure sensor 22 (second deposition amount-estimating means) is interposed at an intermediate portion of the pressure-introducing passage 5a. The differential pressure sensor 22 detects the difference between pressures upstream and downstream of the filter 11 in the exhaust pipe 5 (hereinafter referred to as "the differential pressure DP"), and delivers a signal indicative of the sensed differential pressure DP to the ECU 2. When the amount of PM deposited on the filter 11 (hereinafter referred to as "the PM deposition amount") is small, the air flow resistance of the filter decreases to reduce the differential pressure DP, whereas when the PM deposition amount is large, the air flow resistance of the filter increases to increase the differential pressure DP. This makes it possible to estimate the PM deposition amount according to the differential pressure DP.

Further, a first exhaust gas temperature sensor 23 and a second exhaust gas temperature sensor 24 are inserted into the exhaust pipe 5 at respective locations immediately upstream and downstream of the filter 11. The first exhaust gas temperature sensor 23 detects the temperature TDPFF of exhaust gases immediately upstream of the filter 11 (hereinafter referred to as "the pre-filter gas temperature TDPFF"), and the second exhaust gas temperature sensor 24 detects the temperature TDPFB of exhaust gases immediately downstream of the filter 11 (hereinafter referred to as "the post-filter gas temperature TDPFB"). The first and second exhaust gas temperature sensors 23 and 24 delivers signals indicative of the sensed exhaust gas temperatures TDPFF and TDPFB to the ECU 2.

Furthermore, an accelerator pedal opening sensor 25 detects the degree of opening or stepped-on amount AP of an accelerator pedal, not shown, of the vehicle (hereinafter referred to as "the accelerator pedal opening AP"), and delivers a signal indicative of the sensed accelerator pedal opening AP to the ECU 2. Further, to the ECU 2 is connected a warning lamp 26 which is used to notify the driver that the filter 11 is in a state in which an excess amount of PM has been deposited thereon (hereinafter referred to as "the excess PM-deposited state).

The ECU 2 (first deposition amount-estimating means, filter regeneration means, engine speed-increasing means, second deposition amount-estimating means, filter regeneration-inhibiting means, traveling-time filter regeneration-inhibiting means, regeneration operation-executing means, differential pressure change amount-calculating means, regeneration operation-terminating means, exhaust gas flow rate-detecting means, and differential pressure-correcting means) is implemented by a microcomputer comprised of an I/O interface, a CPU, a RAM, and a ROM. The detection signals from the aforementioned sensors 20 - 25 are input to the CPU after the I/O interface performs A/D conversion and waveform shaping thereon.

In response to these input signals, the CPU executes a regeneration control process for regenerating the filter 11 during traveling or service inspection of the vehicle V, in accordance with control programs read from the ROM. In this process, the regeneration operation for regenerating the filter 11 is performed by post injection for additionally injecting fuel into the combustion chamber 3c during the expansion stroke or the exhaust stroke of each cylinder. The amount POSTQ of fuel injected by the post injection (hereinafter referred to as "the post injection amount POSTQ") is controlled based on the pre-filter gas temperature TDPFF such that the temperature of the filter 11 becomes equal to a target temperature (e.g. 600 °C). Thus, the filter 11 is controlled to be in a high-temperature condition so as to burn PM deposition thereon, whereby the filter 11 is regenerated.

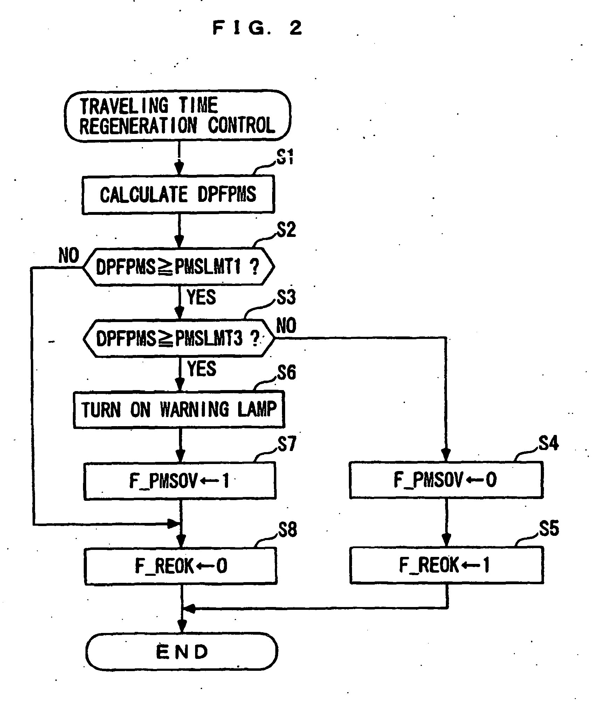

FIG. 2 is a flowchart showing the regeneration control process executed during traveling of the vehicle V, for control of regeneration of the filter 11. This process is carried out in synchronism with generation of the TDC signal. In the present process, first, in a step 1 (shown as S1 in abbreviated form in FIG. 2; the following steps are also shown in abbreviated form), the PM deposition amount DPFPMS is calculated. More specifically, the PM deposition amount DPFPMS is calculated as follows: First, the amount of PM discharged from the engine 3 per TDC event i.e. per combustion of the mixture is calculated by searching a PM discharge amount map, not shown, according to the engine speed NE and the fuel injection amount QINJ. Further, the amount of PM burned in the filter 11 for regeneration thereof is calculated by searching a regeneratingly-burned PM amount map, not shown, according to the amount of oxygen in the filter and the temperature of the filter. It should be noted that the amount of oxygen in the filter is determined according to the fuel injection amount QINJ and the intake air amount QA, and the temperature of the filter is determined according to the intake air amount QA, the pre-filter gas temperature TDPFF, and the differential pressure DP.

Next, the PM deposition amount per TDC event is calculated by subtracting the amount of PM burned for filter regeneration from the calculated amount of discharged PM. Then, the calculated PM deposition amount per TDC event is added to the cumulative value of PM deposition amounts each calculated per TDC event thus far (immediately preceding value of the PM deposition amount DPFPMS) to thereby calculate the current PM deposition amount DPFPMS. It should be noted that the current PM deposition amount DPFPMS is reset when the regeneration operation for regenerating the filter is completed.

Then, it is determined whether or not the calculated PM deposition amount DPFPMS is not smaller than a first predetermined threshold value PMSLMT1 (step 2). If the answer to this question is negative (NO), i.e. if DPFPMS < PMSLMT1 holds, it is judged that the regeneration operation is not to be carried out since the PM deposition amount DPFPMS is relatively small, and the process proceeds to a step 8, wherein a filter regeneration flag F_REOK is set to 0, followed by terminating the present process.

On the other hand, if the answer to the question of the step 2 is affirmative (YES), i.e. if DPFPMS ≧ PMSLMT1 holds, it is determined whether or not the PM deposition amount DPFPMS is not smaller than a third predetermined threshold value PMSLMT3 larger than the first threshold value PMSLMT1 (step 3). If the answer to this question is negative (NO), i.e. if PMSLMT1 ≦ DPFPMS < PMSLMT3 holds, it is judged that the filter 11 is not in the excess PM-deposited state though the PM deposition amount DPFPMS is relatively large, and an excess deposition flag F_PMSOV is set to 0 (step 4). Further, it is judged that the regeneration operation should be executed, and the filter regeneration flag F_REOK is set to 1 (step 5), followed by terminating the present process.

On the other hand, if the answer to the question of the step 3 is affirmative (YES), i.e. if DPFPMS ≧ PMSLMT3 holds, it is judged that the filter 11 is in the excess PM-deposited state, and the warning lamp 26 is turned on to notify the driver of the fact (step 6), while the excess deposition flag F_PMSOV is set to 1 (step 7). Further, to avoid occurrence of cracking or melting of the filter 11 caused by performing the regeneration of the filter 11 in the excess PM-deposited state, it is judged that the regeneration operation is not to be performed, but the step 8 is executed, followed by terminating the present process.

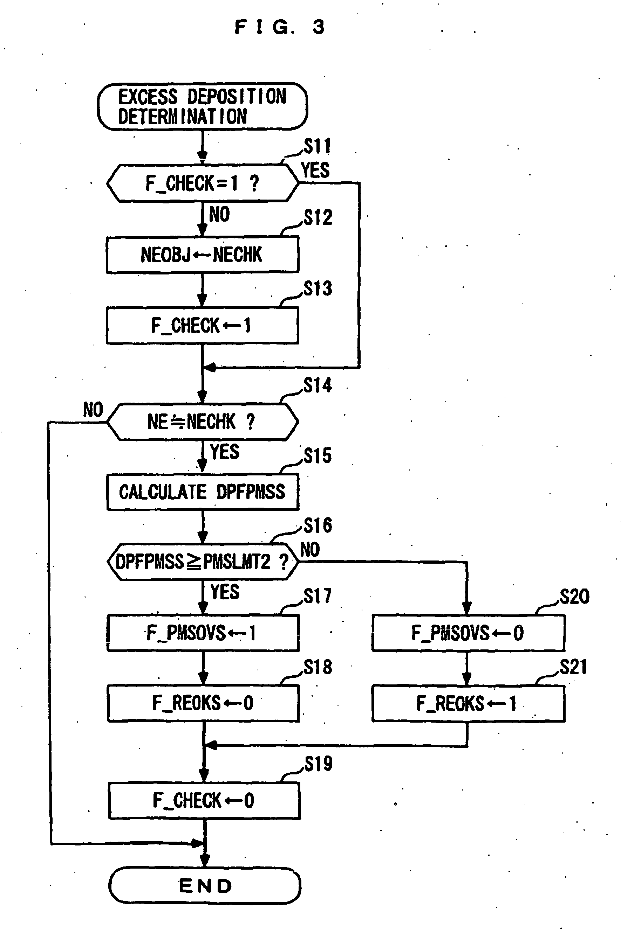

FIG. 3 is a flowchart showing an excess deposition-determining process carried out during service inspection of the vehicle V, for determining whether or not the filter is in the excess PM-deposited state. It should be noted that the service inspection is performed in a service station after the driver noticing lighting of the warning lamp 26 brings the vehicle V to the service station. Further, the excess deposition-determining process is carried out at predetermined time intervals by delivering a start signal from an external diagnosis machine, not shown, to the ECU 2. In the present process, first, it is determined in a step 11 whether or not a determination execution flag F_CHECK is equal to 1.

If the answer to this question is negative (NO), a target engine speed NEOBJ of the engine speed NE is set to a predetermined engine speed NECHK (e.g. 2800 rpm) for excess deposition determination (step 12). By thus setting the target engine speed NEOBJ, the engine speed NE is controlled such that it is increased to the engine speed NECHK for excess deposition determination. Then, the determination execution flag F_CHECK is set to 1 (step 13), and then the process proceeds to a step 14. Since the step 13 is executed in the second and following loops of the present process, the answer to the question of the step 11 becomes affirmative (YES) hereafter, and in this case, the process immediately proceeds to the step 14.

In the step 14, it is determined whether or not the engine speed NE is approximately equal to the engine speed NECHK for excess deposition determination. If the answer to this question is negative (NO), the present process is immediately terminated. On the other hand, if the answer to the question of the step 14 is affirmative (YES), i.e. if the engine speed NE is approximately equal to the engine speed NECHK, a PM deposition amount DPFPMSS is calculated according to the differential pressure DP detected by the differential pressure sensor 22 (step 15). Then, it is determined whether or not the calculated amount DPFPMSS is not smaller than a second predetermined threshold value PMSLMT2 larger than the third threshold value PMSLMT3 (step 16). If the answer to this question is affirmative (YES), i.e. if DPFPMSS $\geqq$ PMSLMT2 holds, it is judged that the differential pressure DP between the upstream and downstream sides of the filter 11 is large, and the filter 11 is in the excess PM-deposited state, and to indicate the fact, the excess deposition flag F_PMSOVS is set to 1 (step 17). Further, to avoid occurrence of cracking or melting of the filter 11 caused by performing the regeneration operation for regenerating the filter 11 in the excess PM-deposited state thereof, it is judged that the regeneration operation is to be inhibited, and hence the filter regeneration flag F_REOKS is set to 0 (step 18). Then, to indicate that the determination is terminated, the determination execution flag F_CHECK is set to 0 (step 19), followed by terminating the present process.

On the other hand, if the answer to the question of the step 16 is negative (NO), i.e. if DPFPMSS < PMSLMT2 holds, it is judged that the filter 11 is not in the excess PM-deposited state, and hence the excess deposition flag F_PMSOVS is set to 0 (step 20). Then, the filter regeneration flag F_REOKS is set to 1 (step 21), and thereafter the step 19 is executed, followed by terminating the present process.

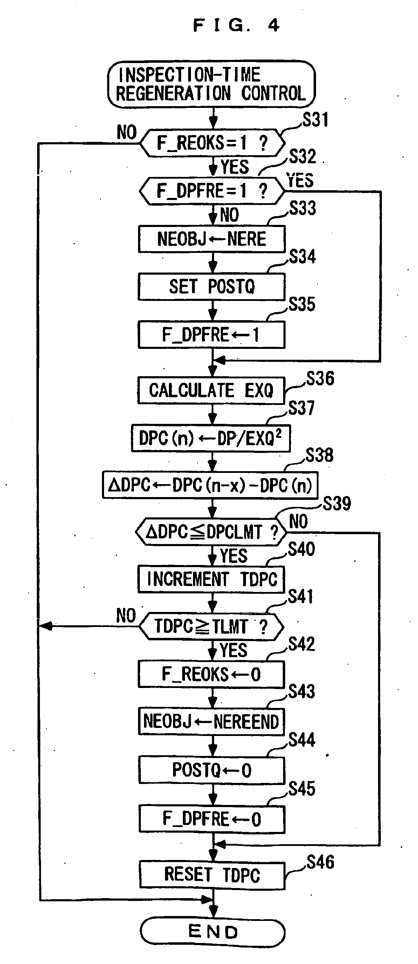

FIG. 4 is a flowchart showing a regeneration control process which does not form part of the present invention and which is executed during the service inspection of the vehicle V according to the result of determination carried out in the excess deposition-determining process, for controlling regeneration of the filter 11. The present process is carried out in synchronism with generation of the TDC signal. In the present process, first, it is determined in a step 31 whether or not the filter regeneration flag F_REOKS set in the step 18 or the step 21 in FIG. 3 is equal to 1. If the answer to this question is negative (NO), the present process is immediately terminated without performing the regeneration operation for regenerating the filter 11.

On the other hand, if the answer to the question of the step 31 is affirmative (YES), i.e. if F_REOKS = 1 holds, it is determined whether or not a regeneration execution flag F_DPFRE is equal to 1 (step 32). If the answer to this question is negative (NO), the target engine speed NEOBJ of the engine speed NE is set to a predetermined regeneration control engine speed NERE (e.g. 1500 rpm) for filter regeneration control (step 33). By thus setting the target engine speed NEOBJ, the engine speed NE is controlled such that it becomes equal to the regeneration control engine speed NERE for filter regeneration control. Then, a post injection amount POSTQ is set according to the engine speed NE and the accelerator pedal opening AP (step 34), whereby the regeneration operation for regenerating the filter 11 is started and the regeneration execution flag F_DPFRE is set to 1 (step 35), followed by the process proceeding to a step 36. If the answer to the question of the step 32 is affirmative (YES), i.e. if the regeneration operation is being performed, the process immediately proceeds to the step 36.

In the step 36, the flow rate EXQ of exhaust gases discharged from the engine 3 (hereinafter referred to as "the exhaust gas flow rate EXQ") is calculated. The exhaust gas flow rate EXQ is determined by the characteristic equation of gases e.g. according to the engine speed NE and the intake air amount QA. Then, the differential pressure DP is divided by the square $EXQ^2$ of the calculated exhaust gas flow rate EXQ, whereby the current corrected differential pressure DPC(n) is calculated (step 37). The differential pressure DP is corrected based on the exhaust gas flow rate EXQ, as described above, because the differential.pressure DP varies with the exhaust gas flow rate EXQ even when the PM deposition amount DPFPMSS remains the same.

Further, the differential pressure DP is divided by the square $EXQ^2$ of the calculated exhaust gas flow rate for the following reason: The following equation (1) represents the relationship between the volumetric flow rate Q of exhaust gases passing through an orifice, the cross-sectional area A of the orifice, and respective pressures P1 and P2 on upstream and downstream sides of the orifice (orifice equation). Further, equations (2) and (3) are variations of the equation (1).

$$Q = Cd \cdot A \sqrt{2 \cdot \frac{P1-P2}{\rho}} \quad \cdots \cdots (1)$$

$$P1-P2 = \frac{\rho}{2 \cdot (Cd \cdot A)^2} \cdot Q^2 \quad \cdots \cdots (2)$$

$$\frac{P1-P2}{Q^2} = \frac{\rho}{2 \cdot (Cd \cdot A)^2} \qquad \cdots\cdots (3)$$

wherein Cd represents the discharge coefficient of the orifice, and $\rho$ the density of the fluid. If the cross-sectional area A of the orifice is fixed, it is apparent from the equation (2) that the differential pressure (P1 - P2) between the upstream and downstream sides of the orifice is proportional to the square $Q^2$ of the volumetric flow rate, and it is apparent from the equation (3) that the differential pressure (P1 - P2)/the square $Q^2$ of the volumetric flow rate is constant. Therefore, when the effective cross-sectional area of the filter 11 is regarded as the cross-sectional area A in the above equations, and the exhaust gas flow rate EXQ as the volumetric flow rate Q, from the equation (3), DP/EXQ$^2$ assumes a value corresponding to the effective cross-sectional area of the filter 11. If this value remains substantially fixed, that is, if it no longer undergoes substantially any change, it can be determined that the regeneration of the filter 11 has been completed. It should be noted that the above-described corrected differential pressure DPC (corrected differential pressure) is subjected to a filtering process, whereby the pulsation of the differential pressure DP caused by the pulsation of exhaust gases, and noise components are eliminated.

In a step 38 following the step 37, the difference (= DPC(n-x) - DPC(n)) between a corrected differential pressure DPC(n-x) calculated a predetermined x number of TDC events earlier (e.g. a time period equivalent to 30 seconds earlier) and the current corrected differential pressure DPC(n) is calculated as a differential pressure change amount $\Delta$ DPC (amount of change in the differential pressure). It should be noted that the corrected differential pressure DPC is stored e.g. by using a ring buffer.

Then, it is determined whether or not the differential pressure change amount $\Delta$ DPC is not larger than a predetermined threshold value DPCLMT (step 39). If the answer to this question is negative (NO), it is judged that the effective cross-sectional area of the filter 11 is increasing in the course of regeneration of the filter 11, and therefore the regeneration operation for regenerating the filter 11 is to be continued, and the process proceeds to a step 46, referred to hereinafter, followed by terminating the present process.

On the other hand, if the answer to the question of the step 39 is affirmative (YES), i.e. if $\Delta$DPC $\leqq$ DPCLMT holds, the counter value TDPC of a counter (not shown) is incremented (step 40), and it is determined whether or not the counter value TDPC is not smaller than a predetermined value TLMT (e.g. equivalent to 150 seconds) (step 41).

If the answer to this question is negative (NO), i.e. if TDPC < TLMT holds, the present process is immediately terminated. On the other hand, if the answer to the question of the step 41 is affirmative (YES), i.e. if a state in which the differential pressure change amount $\Delta$DPC is not larger than the threshold value DPCLMT has continued for a predetermined time period equivalent to the predetermined value TLMT, it is judged that the effective cross-sectional area of the filter 11 has converged to a substantially fixed value, and hence the regeneration of the filter 11 has been terminated, and to indicate the fact, the filter regeneration flag F_REOKS is set to 0 (step 42).

Then, to terminate the regeneration operation, the target engine speed NEOBJ is set to a predetermined engine speed NEREEND (e.g. 850 rpm) for terminating the regeneration operation (step 43), and the post injection amount POSTQ is set to 0 (step 44). Further, the regeneration execution flag F_DPFRE is set to 0 (step 45), and the counter value TDPC is reset (step 46), followed by terminating the present process.

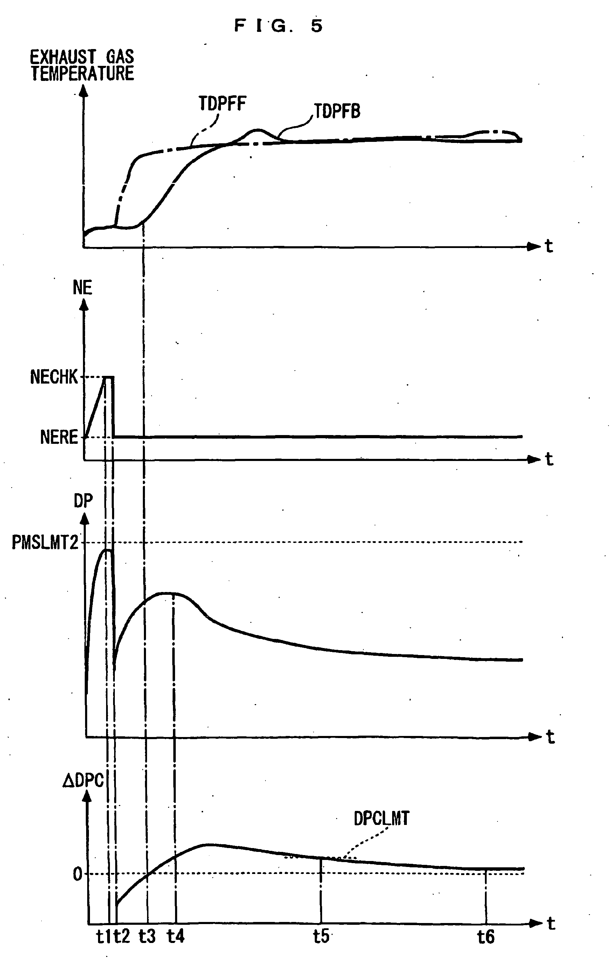

FIG. 5 is a timing diagram showing examples of operations carried out in the processes shown in FIGS. 3 and 4 in the case where it is determined that the filter 11 is not in the excess PM-deposited state, and the regeneration operation for regenerating the filter 11 is performed. First, the engine speed NE is increased to the engine speed NECHK for excess deposition determination (t1). As the engine speed NE is increased, the amount of exhaust gases is increased to increase exhaust pressure, so that the differential pressure DP increases. At this time, when the differential pressure DP is smaller than the second threshold value PMSLMT2, it is determined that the filter 11 is not in the excess PM-deposited state, and based on the determination, the engine speed NE is set to the regeneration control engine speed NERE, and the post injection is performed to thereby start the regeneration operation (t2).

The temperature of exhaust gases rises in accordance with the regeneration operation, causing the pre-filter gas temperature TDPFF to rise progressively, and the temperature of the filter 11 also rises progressively along therewith. When the temperature of the filter 11 has risen to a temperature close to a target temperature (e.g. 600 °C), the PM stats to be burned in the filter 11, whereby the post-filter gas temperature TDPFB as well starts to rise (t3). As the PM is burned, the effective cross-sectional area of the filter 11 increases to decrease the air flow resistance of the filter, whereby the differential pressure DP starts to decrease (t4). The differential pressure DP further decreases along with the progress of the burning of the PM, and the decreasing slope of the differential pressure DP becomes progressively gentler, whereby the differential pressure change amount $\Delta$DPC progressively decreases to become lower than the threshold value DPCLMT (t5). Then, when the state where the differential pressure chance amount $\Delta$ DPC is lower than the threshold value DPCLMT has continued for a predetermined time period (t6), it is judged that the regeneration of the filter 11 has been completed,' and hence the regeneration operation is terminated.

As described above, according to the present embodiment, during traveling of the vehicle V, the PM deposition amount DPFPMS is calculated according to the operating conditions of the engine 3, and the regeneration operation is carried out when the first threshold value PMSLMT1 $\leqq$ the PM deposition amount DPFPMS < the third threshold value PMSLMT3 holds (YES to the step 2, and No to the step 3 in FIG. 2). On the other hand, when the PM deposition amount DPFPMS $\geqq$ the third threshold value PMSLMT3 holds (YES to the step 3 in FIG. 2), it is judged that the filter 11 is in the excess PM-deposited state, and the warning lamp 26 is turned on. After the driver noticing lighting of the warning lamp 26 brings the vehicle V to a service station, in a service inspection executed therein, the PM deposition amount DPFPMSS is calculated according to the differential pressure DP detected in a state where the engine speed NE is increased to the engine speed NECHK for excess deposition determination, and when the calculated PM deposition amount DPFPMSS is not smaller than the second threshold value PMSLMT2, it is determined that the filter 11 is actually in the excess PM-deposited state, so that the regeneration operation is inhibited.

As described above, the estimation of the PM deposition amount DPFPMSS according to the differential pressure DP can be made accurate by executing the estimation according to the differential pressure DP detected when the engine speed NE has been largely increased to the engine speed NECHK for excess deposition determination. Further, when the estimated amount DPFPMSS is not smaller than the second threshold value PMSLMT2, it is judged that the filter 11 is in the excess PM-deposited state, whereby it is possible to properly inhibit the regeneration operation. This makes it possibly to positively prevent occurrence of cracking or melting of the filter 11 caused by overheat thereof.

Further, even when the vehicle V is brought to a service station e.g. when the driver notices the lighting of the warning lamp 26, it is confirmedly determined whether or not the filter 11 is in the excess PM-deposited state, based on the PM deposition amount DPFPMSS estimated according to the differential pressure DP, without performing the regeneration operation for regenerating the filter 11 immediately after the vehicle V is brought to the service station. This makes it possible to confirmedly and accurately determine whether or not the filter 11 is actually in the excess PM-deposited state, irrespective of reliability of the determination performed during traveling of the vehicle V. Further, according to the results of the determination, appropriate measures can be taken. More specifically, when it is determined that the filter 11 is in the excess PM-deposited state, the regeneration operation is inhibited, and the filter 11 can be replaced by another, for example, whereas when it is determined that the filter 11 is not in the excess PM-deposited state, the regeneration operation can be carried out. Furthermore, the PM deposition amount DPFPMSS can be estimated only by increasing the engine speed NE, without causing the vehicle V to travel, and therefore, it is possible to perform the above determination easily in the service station as well.

Furthermore, in the service inspection of the vehicle V, it is judged that the filter 11 is in the excess PM-deposited state, when the PM deposition amount DPFPMSS is not smaller than the second threshold value PMSLMT2 larger than the third threshold value PMSLMT3, so that it is possible to determine accurately whether or not the filter 11 is actually in the excess PM-deposited state. On the other hand, during traveling of the vehicle V, the regeneration operation is inhibited when the PM deposition amount DPFPMS is not smaller than the third threshold value PMSLMT3 smaller than the second threshold value PMSLMT2, and therefore it is possible to reliably avoid execution of the regeneration operation in the excess PM-deposited state, thereby making it possible to positively prevent occurrence of cracking or melting of the filter 11 caused by overheat thereof during traveling of the vehicle V.

Further, according to the present embodiment, during traveling of the vehicle V, the regeneration operation for regenerating the filter 11 is carried out when the PM deposition amount DPFPMS estimated according to the operating conditions of the engine 3 is not smaller than the first threshold value PMSLMT1. Further, when the PM deposition amount DPFPMS is not smaller than the third threshold value PMSLMT3 (> PMSLMT1), it is judged that the filter 11 is in the excess PM-deposited state, and the warning lamp 26 is turned on. When the driver noticing the lighting of the warning lamp 26 brings the vehicle V to a service station, the regeneration operation is carried out when it is judged in the service inspection of the vehicle V that the filter 11 is not in the excess PM-deposited state.

In the regeneration operation, the differential pressure DP detected by the differential pressure sensor 22 is corrected by the square $EXQ^2$ of the exhaust gas flow rate, and the amount of change in the difference $\Delta DPC$ (= DPC (n-x) - DPC (n)) between the corrected differential pressure DPC(n-x) calculated a predetermined x number of times of calculation earlier and the current corrected differential pressure DPC(n) is calculated. Then, during execution of the regeneration operation, it is determined whether or not the differential pressure change amount $\Delta DPC$ is not larger than the threshold value DPCLMT, and when the state in which the differential pressure change amount $\Delta DPC \leqq$ the threshold value DPCLMT holds has continued for at least a time period equivalent to the predetermined value TLMT (YES to the steps 39 and 41 in FIG. 4), it is judged that the differential pressure change amount $\Delta DPC$ has converged, and the regeneration of the filter 11 has been completed, and hence the regeneration operation is terminated. This makes it possible to terminate the regeneration operation in appropriate timing in which the regeneration of the filter 11 has just been actually completed. As a result, it is possible to positively regenerate the filter 11 to reduce time and energy required to regenerate the filter 11.

Further, the differential pressure DP is corrected according to the exhaust gas flow rate EXQ, and the differential pressure change amount Δ DPC is calculated based on the corrected differential pressure DPC. This makes it possible to eliminate influence of a change in the exhaust gas flow rate EXQ on the differential pressure DP. As a result, it is possible to terminate the regeneration operation based on the differential pressure change amount Δ DPC, in more appropriate timing in which the regeneration of the filter 11 is completed.

Furthermore, since the regeneration operation is executed during the service inspection of the vehicle V, the differential pressure is hardly adversely affected by changes in the operating conditions of the engine 3, and therefore it is possible to terminate the regeneration operation in appropriate timing based on the differential pressure change amount Δ DPC.

Although in the above-described process, the exhaust gas flow rate EXQ is calculated according to the engine speed NE and the intake air amount QA, this is not limitative, but the exhaust gas flow rate EXQ may be directly detected by a sensor provided in the exhaust pipe 5.

Further, although in the above-described embodiment, the differential pressure DP is directly detected using the differential pressure sensor 22, this is not limitative, but the differential pressure DP may be determined based on the difference between detection values obtained through detections by pressure sensors arranged at respective locations upstream and downstream of the filter 11. Further, although in the above-described embodiment, the PM deposition amount DPFPMS during traveling of the vehicle V is estimated according to the operating conditions of the engine 3, it may be estimated according to the differential pressure DP detected by the differential pressure sensor 22. Furthermore, although in the above-described embodiment, the description has been given assuming that the FIG. 3 excess deposition-determining process and the FIG. 4 regeneration control process are carried out during the service inspection of the vehicle V, performed after the drive noticing the lighting of the warning lamp 26, this is not limitative, but they may be carried out during a periodic inspection of the vehicle V. Further, although in the above-described regeneration control process, the regeneration operation for regenerating the filter 11 is carried out using the post injection, the regeneration operation may be performed by another suitable method, such as a method of using the throttling of the intake throttle valve 7, together with or in place of the method of using the post injection.

Moreover, although in the above-described embodiment, the present invention is applied to the diesel engine by way of example, this is not limitative, but it can be applied to various types of engines, such as gasoline engines and engines for ship propulsion machines, such as an outboard motor having a vertically-disposed crankshaft.

An exhaust emission control system for an internal combustion engine, which is capable of confirmedly and accurately estimating the amount of deposition of particulates on a filter, and properly inhibiting regeneration of the filter based on the estimated amount of the particulate deposition. A filter collects particulates from exhaust gases. The filter is regenerated when the amount of deposition of particulates which is estimated based on operating conditions of the engine has reached a first predetermined threshold value. The regeneration of the filter is inhibited when the amount of deposition of particulates which is estimated according to the differential pressure detected between upstream and downstream sides of the filter by a differential pressure sensor when the engine speed is increased to a predetermined rotational speed is not smaller than a second predetermined threshold value larger than the first predetermined threshold value.

## Claims

1. An exhaust emission control system for an internal combustion engine (3) installed on an automotive vehicle (V), as a drive source, for reducing exhaust emissions by collecting particulates from exhaust gases discharged from the engine (3) to an exhaust system (5), comprising:

   a filter (11) provided in the exhaust system (5), for collecting particulates from the exhaust gases;
   a differential pressure sensor (22) for detecting a differential pressure between upstream and downstream sides of said filter (11) in the exhaust system (5);
   first deposition amount-estimating means (2) to be operated during traveling of the vehicle (V), for estimating an amount of deposition of the particulates collected by said filter (11);
   filter regeneration means (2) to be operated during traveling of the vehicle (V), for regenerating said filter (11) by burning the particulates deposited on said filter (11) when the estimated amount of deposition of the particulates has reached a first predetermined threshold value (PMSLMT1);
   **characterized by**
   engine speed-increasing means (2) for increasing a rotational speed of the engine (3) to a predetermined rotational speed during service inspection of the vehicle;
   second deposition amount-estimating means (2) to be operated during service inspection of the vehicle (V), for estimating an amount of deposition of the particulates collected by said filter (11) according to the differential pressure detected by said differential pressure sensor (22) when the rotational speed of the engine (3) has been increased; and
filter regeneration-inhibiting means (2) to be operated during service inspection of the vehicle (V), for inhibiting regeneration of said filter (11) when the amount of deposition of the particulates estimated by said second deposition amount-estimating means (2) is not smaller than a second predetermined threshold value (PMSLMT2) larger than the first predetermined threshold value (PMSLMT1).

2. An exhaust emission control system as claimed in claim 1, further comprising traveling-time filter regeneration-inhibiting means (2) for inhibiting regeneration of said filter (11) during traveling of the vehicle (V), when the estimated amount of deposition of the particulates is not smaller than a third predetermined threshold value (PMSLMT3), and wherein the second threshold value (PMSLMT2) is set to a value larger than the third threshold value (PMSLMT3).

3. A method of controlling an exhaust emission control system for an internal combustion engine (3) installed on an automotive vehicle (V), as a drive source, the exhaust emission control system including a filter (11) provided in an exhaust system (5), for collecting particulates from the exhaust gases, and a differential pressure sensor (22) for detecting a differential pressure between upstream and downstream sides of the filter (11) in the exhaust system (5), and reducing exhaust emissions by collecting particulates from exhaust gases discharged from the engine (3) to the exhaust system (5), comprising:

a first deposition amount-estimating step (S1) of estimating an amount of deposition of the particulates collected by the filter (11);
a filter regeneration step (S5) of regenerating the filter (11) by burning the particulates deposited on the filter (11) when the estimated amount of deposition of the particulates has reached a first predetermined threshold value (PMSLMT1);
wherein the estimation of the amount of deposition of the particulates performed in said first deposition amount-estimating step (S1), and the regeneration of the filter in said filter regeneration step (S5) are carried out during traveling of the vehicle (V),
**characterized by**
an engine speed-increasing step (S12) of increasing a rotational speed of the engine (3) to a predetermined rotational speed during service inspection of the vehicle;
a second deposition amount-estimating step (S15) of estimating an amount of deposition of the particulates collected by the filter (11) according to the differential pressure detected by the differential pressure sensor (22) when the rotational speed of the engine has been increased; and
a filter regeneration-inhibiting step (S18) of inhibiting regeneration of the filter (11) when the amount of deposition of the particulates estimated in said second deposition amount-estimating step (S15) is not smaller than a second predetermined threshold value (PMSLMT2) larger than the first predetermined threshold value (PMSLMT1),
wherein the estimation of the amount of deposition of the particulates performed in said second deposition amount-estimating step (S15), and the inhibition of regeneration of the filter (11) based on the estimated amount of deposition of the particulates are carried out during service inspection of the vehicle (V).

4. A method as claimed In claim 3, further comprising a traveling-time filter regeneration-inhibiting step (S8) of inhibiting regeneration of the filter (11) during traveling of the vehicle (V), when the estimated amount of deposition of the particulates is not smaller than a third predetermined threshold value (PMSLMT3), and wherein the second threshold value (PMSLMT2) is set to a value larger than the third threshold value (PMSLMT3).

**Patentansprüche**

1. Abgasemission-Steuer-/Regelsystem für eine Brennkraftmaschine (3), die an einem Eigenantriebsfahrzeug (V) als Antriebsquelle installiert ist, um Abgasemissionen durch Einfangen von Partikeln aus von der Maschine (3) zu einem Abgassystem (5) ausgestoßenen Abgasen zu reduzieren, umfassend:

einen Filter (11), der in dem Abgassystem (5) vorgesehen ist, um Partikel aus den Abgasen einzufangen;
einen Differenzdrucksensor (22) zum Erfassen eines Differenzdrucks zwischen einer stromaufwärtigen und einer stromabwärtigen Seite des Filters (11) in dem Abgassystem (5);
erste Ablagerungsmengen-Schätzmittel (2) für einen Betrieb während der Fahrt des Fahrzeugs (V), um eine Menge an Ablagerung der durch den Filter (11) eingefangenen Partikel abzuschätzen;

Filterregenerationsmittel (2) für einen Betrieb während der Fahrt des Fahrzeugs (V) zum Regenerieren des Filters (11) durch Verbrennen der an dem Filter (11) abgelagerten Partikel, wenn die geschätzte Menge an Ablagerung der Partikel einen ersten vorbestimmten Schwellwert (PMSLMT1) erreicht hat;
**gekennzeichnet durch**
Maschinendrehzahl-Steigerungsmittel (2) zum Steigern einer Drehzahl der Maschine (3) auf eine vorbestimmte Drehzahl während einer Wartungsinspektion des Fahrzeugs;
zweite Ablagerungsmengen-Schätzmittel (2) für einen Betrieb während der Wartungsinspektion des Fahrzeugs (V), um eine Menge an Ablagerung der **durch** den Filter (11) eingefangenen Partikel nach Maßgabe des Differenzdrucks abzuschätzen, der **durch** den Differenzdrucksensor (22) erfasst wird, wenn die Drehzahl der Maschine (3) gesteigert worden ist; und
Filterregeneration-Verhinderungsmittel (2) für einen Betrieb während einer Wartungsinspektion des Fahrzeugs (V) zum Verhindern einer Regeneration des Filters (11), wenn die Menge an Ablagerung der Partikel, die **durch** das zweite Ablagerungsmengen-Schätzmittel (2) abgeschätzt wurde, nicht kleiner ist als ein zweiter vorbestimmter Schwellwert (PMSLMT2), der größer ist als der erste vorbestimmte Schwellwert (PMSLMT1).

2. Abgasemission-Steuer-/Regelsystem nach Anspruch 1, ferner umfassend Fahrzeit-Filterregeneration-Verhinderungsmittel (2) zum Verhindern einer Regeneration des Filters (11) während einer Fahrt des Fahrzeugs (V), wenn die abgeschätzte Menge an Ablagerung der Partikel nicht kleiner ist als ein dritter vorbestimmter Schwellwert (PMSLMT3) und
wobei der zweite Schwellwert (PMSLMT2) auf einen Wert eingestellt ist, der größer ist als der dritte Schwellwert (PMSLMT3).

3. Verfahren zum Steuern/Regeln eines Abgasemission-Steuer-Regelsystems für eine Brennkraftmaschine (3), die an einem Eigenantriebsfahrzeug (V) als eine Antriebsquelle installiert ist, wobei das Abgasemission-Steuer-/Regelsystem einen Filter (11) umfasst, der in einem Abgassystem (5) vorgesehen ist, um Partikel aus den Abgasen einzufangen, und einen Differenzdrucksensor (22) umfasst, um einen Differenzdruck zwischen einer stromaufwärtigen und einer stromabwärtigen Seite des Filters (11) in dem Abgassystem (5) zu erfassen, und Abgasemissionen durch Einfangen von Partikeln aus Abgasen, die von der Maschine (3) zu dem Abgassystem (5) ausgestoßen wurden, reduziert, umfassend:

einen ersten Ablagerungsmengen-Schätzschritt (S1) zum Schätzen einer Menge an Ablagerung der durch den Filter (11) eingefangenen Partikel; einen Filterregenerationsschritt (S5) zum Regenerieren des Filters (11) durch Verbrennen der an dem Filter (11) abgelagerten Partikel, wenn die geschätzte Menge an Ablagerung der Partikel einen ersten vorbestimmten Schwellwert (PMSLMT1) erreicht hat;
wobei die Abschätzung der Menge an Ablagerung der Partikel, die in dem ersten Ablagerungsmengen-Schätzschritt (S1) ausgeführt wird,
sowie die Regeneration des Filters in dem Filterregenerationsschritt (S5), während der Fahrt des Fahrzeugs (V) ausgeführt werden,
**gekennzeichnet durch**
einen Maschinendrehzahl-Steigerungsschritt (S12) zum Steigern einer Drehzahl der Maschine (3) auf eine vorbestimmte Drehzahl während der Wartungsinspektion des Fahrzeugs;
einen zweiten Ablagerungsmengen-Schätzschritt (S15) zum Schätzen einer Menge an Ablagerung der **durch** den Filter (11) eingefangenen Partikel nach Maßgabe des Differenzdrucks, der **durch** den Differenzdrucksensor (22) erfasst wird, wenn die Drehzahl der Maschine gesteigert worden ist; und
einen Filterregeneration-Verhinderungsschritt (S18) zum Verhindern einer Regeneration des Filters (11), wenn die Menge an Ablagerungen der Partikel, die in dem zweiten Ablagerungsmengen-Schätzschritt (S15) abgeschätzt wurde, nicht kleiner ist als ein zweiter vorbestimmter Schwellwert (PMSLMT2), der größer ist als der erste vorbestimmte Schwellwert (PMSLMT1),
wobei die Abschätzung der Menge an Ablagerung der Partikel, die in dem zweiten Ablagerungsmengen-Schätzschritt (S15) ausgeführt wird, und die Verhinderung der Regeneration des Filters (11) auf Grundlage der geschätzten Menge an Ablagerung der Partikel während einer Wartungsinspektion des Fahrzeugs (V) ausgeführt werden.

4. Verfahren nach Anspruch 3, ferner umfassend einen Fahrzeit-Filterregeneration-Verhinderungsschritt (S8) zum Verhindern einer Regeneration des Filters (11) während einer Fahrt des Fahrzeugs (V), wenn die geschätzte Menge an Ablagerung der Partikel nicht kleiner ist als ein dritter vorbestimmter Schwellwert (PMSLMT3) und
wobei der zweite Schwellwert (PMSLMT2) auf einen Wert eingestellt ist, der größer ist als der dritte Schwellwert (PMSLMT3).

**Revendications**

1.  Système de régulation d'émissions d'échappement pour un moteur à combustion interne (3) installé sur un véhicule automobile (V), en tant que source motrice, pour réduire des émissions d'échappement en collectant des particules à partir de gaz d'échappement déchargés à partir du moteur (3) jusqu'à un système de d'échappement (5), comprenant :

    un filtre (11) prévu dans le système de d'échappement (5), pour collecter des particules à partir des gaz d'échappement ;
    un capteur de pression différentielle (22) pour détecter une pression différentielle entre des côtés amont et aval dudit filtre (11) dans le système de d'échappement (5) ;
    des premiers moyens d'estimation de quantité de dépôt (2) destinés à être mis en fonctionnement au cours du déplacement du véhicule (V), pour estimer une quantité de dépôt des particules collectées par ledit filtre (11) ;
    des moyens de régénération de filtre (2) destinés à être mis en fonctionnement au cours du déplacement du véhicule (V), pour régénérer ledit filtre (11) en brûlant les particules déposées sur ledit filtre (11) lorsque la quantité estimée de dépôt des particules a atteint une première valeur seuil prédéterminée (PMSLMT1) ;
    **caractérisé par**
    des moyens d'augmentation de régime de moteur (2) pour augmenter une vitesse de rotation du moteur (3) jusqu'à une vitesse de rotation prédéterminée au cours de l'inspection d'entretien du véhicule ;
    des seconds moyens d'estimation de quantité de dépôt (2) destinés à être mis en fonctionnement au cours de l'inspection d'entretien du véhicule (V), pour estimer une quantité de dépôt des particules collectées par ledit filtre (11) selon la pression différentielle détectée par ledit capteur de pression différentielle (22) lorsque la vitesse de rotation du moteur (3) a été augmentée ; et
    des moyens anti-régénération de filtre (2) destinés à être mis en fonctionnement au cours de l'inspection d'entretien du véhicule (V), pour empêcher la régénération dudit filtre (11) lorsque la quantité de dépôt des particules estimée par lesdits seconds moyens d'estimation de quantité de dépôt (2) n'est pas inférieure à une deuxième valeur seuil prédéterminée (PMSLMT2) supérieure à la première valeur seuil prédéterminée (PMSLMT1).

2.  Système de régulation d'émissions d'échappement selon la revendication 1, comprenant en outre des moyens anti-régénération de filtre de temps de déplacement (2) pour empêcher la régénération dudit filtre (11) au cours du déplacement du véhicule (V), lorsque la quantité estimée de dépôt des particules n'est pas inférieure à une troisième valeur seuil prédéterminée (PMSLMT3), et dans lequel la deuxième valeur seuil (PMSLMT2) est établie à une valeur supérieure à la troisième valeur seuil (PMSLMT3).

3.  Procédé de commande d'un système de régulation d'émission d'échappement pour un moteur à combustion interne (3) installé sur un véhicule automobile (V), en tant que source motrice, le système de régulation d'émission d'échappement comprenant un filtre (11) prévu dans un système de d'échappement (5), pour collecter des particules à partir des gaz d'échappement, et un capteur de pression différentielle (22) pour détecter une pression différentielle entre des côtés amont et aval du filtre (11) dans le système de d'échappement (5), et réduire des émissions d'échappement en collectant des particules à partir de gaz d'échappement déchargés à partir du moteur (3) jusqu'au système de d'échappement (5), comprenant :

    une première étape d'estimation de quantité de dépôt (S1) consistant à estimer une quantité de dépôt des particules collectées par le filtre (11) ;
    une étape de régénération de filtre (S5) consistant à régénérer le filtre (11) en brûlant les particules déposées sur le filtre (11) lorsque la quantité estimée de dépôt des particules a atteint une première valeur seuil prédéterminée (PMSLMT1) ;
    dans lequel l'estimation de la quantité de dépôt des particules réalisée dans ladite première étape d'estimation de quantité de dépôt (S1), et la régénération du filtre dans ladite étape de régénération de filtre (S5) sont exécutées au cours du déplacement du véhicule (V),
    **caractérisé par**
    une étape d'augmentation de régime de moteur (S12) consistant à augmenter une vitesse de rotation du moteur (3) jusqu'à une vitesse de rotation prédéterminée au cours de l'inspection d'entretien du véhicule ;
    une seconde étape d'estimation de quantité de dépôt (S15) consistant à estimer une quantité de dépôt des particules collectées par le filtre (11) selon la pression différentielle détectée par le capteur de pression différentielle (22) lorsque la vitesse de rotation du moteur a été augmentée ; et
    une étape anti-régénération de filtre (S18) consistant à empêcher la régénération du filtre (11) lorsque la quantité de dépôt des particules estimée dans ladite seconde étape d'estimation de quantité de dépôt (S15) n'est pas inférieure à une deuxième valeur seuil prédéterminée (PMSLMT2) supérieure à la première valeur seuil prédéterminée (PMSLMT1),

dans lequel l'estimation de la quantité de dépôt des particules réalisée dans ladite seconde étape d'estimation de quantité de dépôt (S15), et l'anti-régénération du filtre (11) sur la base de la quantité estimée de dépôt des particules sont exécutées au cours de l'inspection d'entretien du véhicule (V).

4. Procédé selon la revendication 3, comprenant en outre une étape anti-régénération de filtre durant le déplacement (S8) consistant à empêcher la régénération du filtre (11) au cours du déplacement du véhicule (V), lorsque la quantité estimée de dépôt des particules n'est pas inférieure à une troisième valeur seuil prédéterminée (PMSLMT3), et dans lequel la deuxième valeur seuil (PMSLMT2) est établie à une valeur supérieure à la troisième valeur seuil (PMSLMT3).

FIG. 1

## F I G. 2

```
         ┌─────────────────────────┐
         │   TRAVELING TIME        │
         │ REGENERATION CONTROL    │
         └─────────────────────────┘
                     │  S1
                     ▼
         ┌─────────────────────────┐
         │   CALCULATE DPFPMS      │
         └─────────────────────────┘
                     │  S2
      NO             ▼
   ┌───────< DPFPMS ≧ PMSLMT1 ? >
   │              │ YES   S3
   │              ▼                    NO
   │      < DPFPMS ≧ PMSLMT3 ? >──────────────┐
   │              │ YES   S6                   │
   │              ▼                            │
   │   ┌─────────────────────────┐            │
   │   │  TURN ON WARNING LAMP    │            │
   │   └─────────────────────────┘            │
   │              │  S7                        │  S4
   │              ▼                            ▼
   │   ┌─────────────────────┐     ┌─────────────────────┐
   │   │   F_PMSOV ← 1       │     │   F_PMSOV ← 0       │
   │   └─────────────────────┘     └─────────────────────┘
   │              │  S8                        │  S5
   └──────────────▼                            ▼
       ┌─────────────────────┐     ┌─────────────────────┐
       │   F_REOK ← 0        │     │   F_REOK ← 1        │
       └─────────────────────┘     └─────────────────────┘
                  │                            │
                  ▼◄───────────────────────────┘
         ┌─────────────────────┐
         │       E N D         │
         └─────────────────────┘
```

17

# F I G. 3

```
        ┌─────────────────────────┐
        │ EXCESS DEPOSITION       │
        │ DETERMINATION           │
        └─────────────────────────┘
                    │
                    ▼              ╭S11
            ╱───────────────────╲  YES
           ⟨   F_CHECK = 1 ?     ⟩──────┐
            ╲───────────────────╱       │
                    │ NO    ╭S12        │
                    ▼                   │
        ┌─────────────────────────┐     │
        │   NEOBJ ← NECHK         │     │
        └─────────────────────────┘     │
                    │       ╭S13        │
                    ▼                   │
        ┌─────────────────────────┐     │
        │   F_CHECK ← 1           │     │
        └─────────────────────────┘     │
                    │                   │
                    ◄───────────────────┘
                    │              ╭S14
       NO   ╱───────────────────╲
      ┌────⟨   NE ≒ NECHK ?      ⟩
      │     ╲───────────────────╱
      │             │ YES   ╭S15
      │             ▼
      │ ┌─────────────────────────┐
      │ │  CALCULATE DPFPMSS      │
      │ └─────────────────────────┘
      │             │           ╭S16
      │             ▼                        NO
      │   ╱───────────────────────╲
      │  ⟨ DPFPMSS ≧ PMSLMT2 ?     ⟩──────────────────┐
      │   ╲───────────────────────╱                   │
      │             │ YES   ╭S17                  ╭S20 │
      │             ▼                                  ▼
      │ ┌─────────────────────────┐   ┌─────────────────────────┐
      │ │   F_PMSOVS ← 1          │   │   F_PMSOVS ← 0          │
      │ └─────────────────────────┘   └─────────────────────────┘
      │             │       ╭S18           │       ╭S21
      │             ▼                      ▼
      │ ┌─────────────────────────┐   ┌─────────────────────────┐
      │ │   F_REOKS ← 0           │   │   F_REOKS ← 1           │
      │ └─────────────────────────┘   └─────────────────────────┘
      │             │                      │
      │             ◄──────────────────────┘
      │             │       ╭S19
      │             ▼
      │ ┌─────────────────────────┐
      │ │   F_CHECK ← 0           │
      │ └─────────────────────────┘
      │             │
      └─────────────┤
                    ▼
        ┌─────────────────────────┐
        │        E N D            │
        └─────────────────────────┘
```

## F I G. 4

```
        ┌─────────────────────────┐
        │  INSPECTION-TIME        │
        │  REGENERATION CONTROL   │
        └─────────────────────────┘
                    │
         NO    ┌─────────────┐ S31
        ◄──────┤ F_REOKS=1 ? │
        │      └─────────────┘
        │          │ YES    S32
        │      ┌─────────────┐         YES
        │      │ F_DPFRE=1 ? ├──────────────┐
        │      └─────────────┘              │
        │          │ NO      S33            │
        │      ┌─────────────┐              │
        │      │ NEOBJ←NERE  │              │
        │      └─────────────┘              │
        │          │         S34            │
        │      ┌─────────────┐              │
        │      │  SET POSTQ  │              │
        │      └─────────────┘              │
        │          │         S35            │
        │      ┌─────────────┐              │
        │      │  F_DPFRE←1  │              │
        │      └─────────────┘              │
        │          │◄──────────────────────┘
        │      ┌─────────────┐  S36
        │      │ CALCULATE EXQ│
        │      └─────────────┘
        │          │          S37
        │      ┌─────────────────┐
        │      │ DPC(n)←DP/EXQ²  │
        │      └─────────────────┘
        │          │              S38
        │      ┌────────────────────────┐
        │      │ ΔDPC←DPC(n-x)-DPC(n)   │
        │      └────────────────────────┘
        │          │              S39
        │      ┌─────────────────┐  NO
        │      │ ΔDPC≦DPCLMT ?   ├──────┐
        │      └─────────────────┘      │
        │          │ YES      S40       │
        │      ┌─────────────┐          │
        │      │ INCREMENT TDPC│        │
        │      └─────────────┘          │
        │          │          S41       │
        │  NO  ┌─────────────┐          │
        ◄──────┤ TDPC≧TLMT ? │          │
               └─────────────┘          │
                   │ YES      S42       │
               ┌─────────────┐          │
               │  F_REOKS←0  │          │
               └─────────────┘          │
                   │          S43       │
               ┌──────────────────┐     │
               │ NEOBJ←NEREEND    │     │
               └──────────────────┘     │
                   │          S44       │
               ┌─────────────┐          │
               │  POSTQ←0    │          │
               └─────────────┘          │
                   │          S45       │
               ┌─────────────┐          │
               │  F_DPFRE←0  │          │
               └─────────────┘          │
                   │◄───────────────────┘
               ┌─────────────┐  S46
               │  RESET TDPC │
               └─────────────┘
                   │
               ┌─────────┐
               │   END   │
               └─────────┘
```

# F I G. 5

EXHAUST GAS
TEMPERATURE

TDPFF    TDPFB

NE

NECHK

NERE

t

DP

PMSLMT2

t

ΔDPC

DPCLMT

0

t1 t2  t3  t4          t5              t6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H08284643 B

- JP H05332125 B